# EUROPÄISCHE PATENTSCHRIFT

(11) **EP 4 180 654 B1**
(45) Veröffentlichungstag und Bekanntmachung des Hinweises auf die Patenterteilung: **26.02.2025**
(21) Anmeldenummer: 21208379.4
(22) Anmeldetag: 16.11.2021
(51) Int. Cl.: F03D 1/06, F03D 80/40

(54) **WINDENERGIEANLAGEN-ROTORBLATT**
WIND TURBINE ROTOR BLADE
PALE DE ROTOR POUR ÉOLIENNES

(43) Veröffentlichungstag der Anmeldung: 17.05.2023
(73) Patentinhaber: Wobben Properties GmbH, 26607 Aurich (DE)
(72) Erfinder: MAHMOUD, Muhanad, 26605 Aurich (DE); STEMBERG, Jochen, 26607 Aurich (DE); DABOUL, Hussam, 26624 Südbrookmerland (DE)
(74) Vertreter: Eisenführ Speiser

(56) Entgegenhaltungen:
- EP-A1- 3 450 751
- CN-A- 107 905 962
- CN-U- 213 574 483
- US-A1- 2011 223 033

## Beschreibung

Die vorliegende Erfindung betrifft ein Windenergieanlagen-Rotorblatt.

Da die Rotorblätter einer Windenergieanlage ungeschützt allen Witterungsbedingungen ausgesetzt sind, kann es bei bestimmten Temperaturen zu einer Vereisung der Rotorblätter kommen. Um dies zu verhindern, kann eine Rotorblattheizung verwendet werden. Hierbei kann entweder eine Heizung außen am Rotorblatt vorgesehen werden oder erwärmte Luft kann in das Rotorblatt geleitet werden.

Zur Vermeidung der Vereisung der Rotorblätter wird oftmals eine Rotorblattheizung verwendet. Hierbei wird typischerweise erwärmte Luft im Bereich der Rotorblattwurzel in das Innere des Rotorblattes eingeleitet. Die erwärmte Luft erwärmt wiederum die Rotorblattschale, beispielsweise im Bereich der Rotorblattnase, so dass eine Enteisung des Rotorblattes erreicht werden kann.

EP 3 450 751 A1 zeigt ein Windenergieanlagen-Rotorblatt mit einer Rotorblatt-Heizung.

WO 2017/021350 A1 zeigt ein Windenergieanlagen-Rotorblatt mit einem Rotorblattwurzelbereich und einem Rotorblattspitzenbereich und einer Rotorblatt-Heizung. Ferner ist mindestens ein Steg entlang einer Längsrichtung des Rotorblattes vorgesehen. An dem Steg kann eine Umlenkeinheit zum Umlenken der Luft vorgesehen werden.

WO 2018/211055 zeigt ein Rotorblatt einer Windenergieanlage, welches einen Steg und eine Umlenkeinheit an der Rotorblattspitze zum Umlenken von erwärmter Luft aufweist.

Daher ist eine Aufgabe der vorliegenden Erfindung, ein Windenergieanlagen-Rotorblatt mit einer verbesserten Rotorblattbeheizung vorzusehen.

Diese Aufgabe wird durch ein Windenergieanlagen-Rotorblatt nach Anspruch 1 gelöst.

Somit wird ein Windenergieanlagen-Rotorblatt mit einer Rotorblattschale, welche ein Innenvolumen umgibt und mindestens einen Vortex-Generator im Innenvolumen aufweist, vorgesehen. Durch das Vorsehen der Vortex-Generatoren in dem Innenvolumen (z. B. an der Innenseite der Rotorblattschale) kann die Luftströmung im Inneren der Rotorblattschale verbessert werden, was zu einer verbesserten Wärmeübertragung und damit einer besseren Erwärmung der Rotorblätter führt.

Gemäß der Erfindung sind erste Vortex-Generatoren an einer Innenseite der Rotorblattschale vorgesehen.

Gemäß der vorliegenden Erfindung weist das Rotorblatt mindestens einen Steg entlang einer Längsrichtung des Rotorblattes auf. Erfindungsgemäß sind zweite Vortex-Generatoren an dem mindestens einen Steg angeordnet bzw. mit dem Steg befestigt.

Gemäß einem weiteren Aspekt der vorliegenden Erfindung weist das Rotorblatt mindestens einen ersten und zweiten Steg entlang einer Längsrichtung des Rotorblattes auf. Ferner ist ein erster Luftkanal zwischen einer Vorderkante des Rotorblattes und einem ersten Steg vorgesehen, wobei mindestens ein Vortex-Generator in dem ersten Luftkanal vorgesehen ist.

Gemäß einem weiteren Aspekt der vorliegenden Erfindung weist das Rotorblatt einen zweiten Luftkanal zwischen einem Steg und einer Rotorblatthinterkante auf. Mindestens ein Vortex-Generator ist zumindest teilweise in dem zweiten Luftkanal entlang der Längsrichtung des Rotorblattes vorgesehen.

Gemäß einem weiteren Aspekt der vorliegenden Erfindung weist das Rotorblatt mindestens einen Vortex-Generator in einem dritten Luftkanal zwischen dem ersten und zweiten Steg auf.

Gemäß einem weiteren Aspekt der vorliegenden Erfindung weist das Rotorblatt ein Rotorblattheizsystem in oder an der Wurzel des Rotorblattes auf. Das Rotorblattheizsystem erzeugt warme Luft, welche in das Innenvolumen des Rotorblattes befördert wird.

Die Erfindung betrifft ebenfalls eine Windenergieanlage mit mindestens einem oben beschrieben Windenergieanlagen-Rotorblatt.

Durch die Montage von Vortex-Generatoren an der Innenseite der Rotorblattschale und an dem Steg bzw. den Stegen kann die Wärmeübertragung der erwärmten Luft auf die Rotorblattschale verbessert werden. Aufgrund der Geometrie der Vortex-Generatoren führt ein Vorsehen der Vortex-Generatoren im Inneren des Rotorblattes nicht zu einem erheblichen Druckverlust. Dies wird dadurch bewirkt, dass der Wanddruckverlust hauptsächlich vom normalen Gradienten der Geschwindigkeitskomponente entlang der Hauptströmungsrichtung an der Wand und nicht vom Gradienten der Geschwindigkeitskomponente der Sekundärströmung abhängt.

Somit wird ein Windenergieanlagen-Rotorblatt mit einer (zweiteiligen) Blattschale vorgesehen, welche ein Innenvolumen umgibt. Das Rotorblatt weist ferner eine Rotorblattwurzel und eine Rotorblattspitze auf. Zwischen den beiden Blattschalen ist entlang einer Längsrichtung des Rotorblattes mindestens ein Steg vorgesehen, so dass das Innenvolumen des Rotorblattes in mindestens zwei Abschnitte aufgeteilt wird. Das Rotorblatt weist ferner eine Rotorblattheizung auf, welche beispielsweise im Bereich der Rotorblattwurzel vorgesehen ist und erwärmte Luft in das Innenvolumen des Rotorblattes befördert. Zur Verbesserung der Effektivität der Blattheizung ist im Innenvolumen mindestens ein erster Vortex-Generator vorgesehen. Mindestens ein zweiter Vortex-Generator ist an dem mindestens einen Steg vorgesehen. Mit der durch die Vortex-Generatoren bewirkten gleichmäßigeren Durchmischung der Strömung kommt es zu einer verbesserten Wärmeübertragung auf die Rotorblattschalen, so dass eine verbesserte Rotorblattheizung durch Vorsehen der Vortex-Generatoren erreicht werden kann.

Ein Steg ist zwischen den zwei Blattschalen (Druckseite, Saugseite) vorgesehen, so dass im Bereich der Rotorblattvorderkante ein Luftkanal entsteht, durch welchen die von der Rotorblattheizung erwärmte Luft entlangströmen kann. Mindestens ein dritter Vortex-Generator wird im Bereich des ersten Kanals zumindest teilweise entlang einer Längsachse des Rotorblattes vorgesehen.

Gemäß einem weiteren Aspekt der vorliegenden Erfindung ist ein zweiter Steg zwischen den beiden Rotorblattschalen vorgesehen, so dass ein zweiter Kanal im Bereich der Rotorblatthinterkante entsteht. Ein optionaler vierter Vortex-Generator kann in diesem zweiten Kanal vorgesehen sein.

Gemäß einem Aspekt der vorliegenden Erfindung kann ein dritter Kanal zumindest teilweise zwischen dem ersten und zweiten Steg vorgesehen sein. Optional können in dem dritten Kanal fünfte Vortex-Generatoren vorgesehen sein.

Gemäß der Erfindung wird durch Vorsehen der Vortex-Generatoren im Innenvolumen des Rotorblattes die Strömung durchmischt, was zu einer gleichmäßigeren Temperaturverteilung führt. Dies hat eine Steigerung des Wärmeübergangskoeffizienten α zur Folge. Zusätzlich zu den Vortex-Generatoren können Querschnittsverengungen im Inneren der Rotorblätter vorgesehen sein. Gemäß der Erfindung erfolgt eine Änderung der Blattinnenströmung zur Verbesserung einer Wärmeübertragung der erhitzten Luft von der Blattheizung an die Rotorblattschale. Die Querschnittsverengungen stellen passive Möglichkeiten der Erhöhung der Strömungsgeschwindigkeit dar.

Gemäß einem Aspekt der Erfindung können die Vortex-Generatoren und die Querschnittsverengungen nachträglich eingebaut werden.

Weitere Ausgestaltungen der Erfindung sind Gegenstand der Unteransprüche.

Vorteile und Ausführungsbeispiele der Erfindung werden nachstehend unter Bezugnahme auf die Zeichnung näher erläutert.
- Fig. 1: zeigt eine schematische Darstellung einer Windenergieanlage gemäß der Erfindung,
- Fig. 2A: zeigen einen schematischen Querschnitt und einen schematischen
- und 2B: Längsschnitt eines Rotorblattes gemäß dem Stand der Technik,
- Fig. 3A: zeigt einen schematischen Querschnitt eines Rotorblattes gemäß einem Aspekt der Erfindung, und
- Fig. 3B: zeigt einen schematischen Längsschnitt eines Rotorblattes gemäß Fig. 3A.

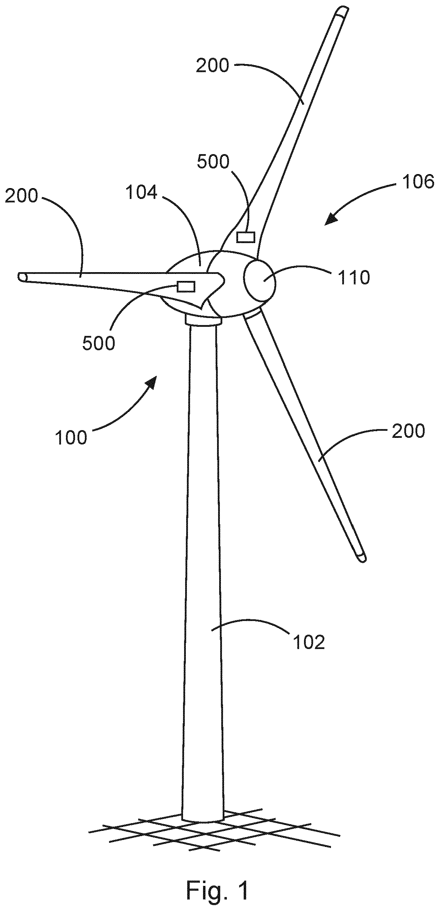

Fig. 1 zeigt eine schematische Darstellung einer Windenergieanlage gemäß der Erfindung. Die Windenergieanlage 100 weist einen Turm 102 und eine Gondel 104 auf dem Turm 102 auf. An der Gondel 104 ist ein aerodynamischer Rotor 106 mit drei Rotorblättern 200 und einem Spinner 110 vorgesehen. Der aerodynamische Rotor 106 wird im Betrieb der Windenergieanlage durch den Wind in eine Drehbewegung versetzt und dreht somit auch einen Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie. Die Pitchwinkel der Rotorblätter 200 können durch Pitchmotoren an den Rotorblattwurzeln der jeweiligen Rotorblätter 200 verändert werden.

Zur Rotorblattenteisung kann eine Rotorblattheizung 500 im Bereich einer Rotorblattwurzel vorgesehen sein. Alternativ dazu kann die Rotorblattheizung 500 im Bereich einer Rotornabe oder an einem Rotorblattanschluss vorgesehen sein. Die Rotorblattheizung 500 erzeugt warme Luft und leitet sie dann in das Innere des Rotorblattes zur Enteisung des Rotorblattes oder zur Vorbeugung einer Vereisung.

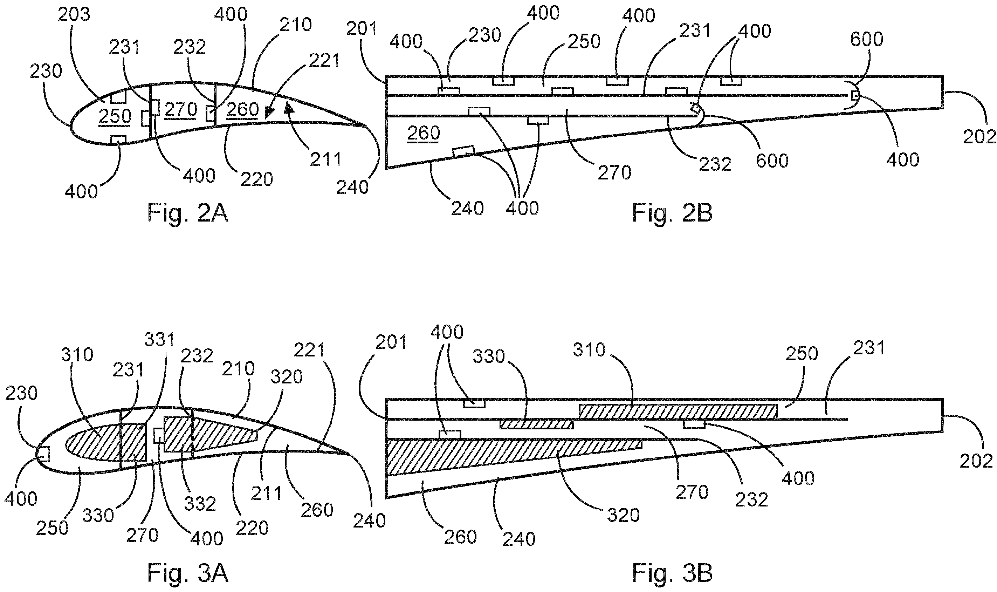

Fig. 2A zeigt einen Querschnitt eines Rotorblattes und Fig. 2B zeigt einen Längsschnitt eines Rotorblattes. Das Rotorblatt 200 weist zwei Blattschalen 210, 220 jeweils mit einer Innenseite 211, 221 auf, welche ein Innenvolumen 203 umgeben. Das Rotorblatt 200 weist ferner eine Rotorblattvorderkante 230 und eine Rotorblatthinterkante 240 auf. Zwischen den Blattschalen 210, 220 können Stege 231, 232 vorgesehen sein, so dass das Innenvolumen 203 in verschiedene Abschnitte oder Kanäle 250, 260 und 270 (erster Kanal 250 zwischen Vorderkante 230 und erstem Steg 231, zweiter Kanal 260 zwischen Hinterkante 240 und zweitem Steg 232 und dritter Kanal 270 zwischen erstem und zweitem Steg 231, 232) aufgeteilt werden kann. Der Steg 231 kann beispielsweise länger sein als der Steg 232.

Optional können Umlenkbögen 600 am freien Ende der Stege vorgesehen sein. Gemäß einem Aspekt der vorliegenden Erfindung können Vortex-Generatoren im oder am Umlenkbogen vorgesehen sein.

Im Inneren des Rotorblattes, d. h. an der Innenseite der Rotorblattschalen und/oder an den Stegen 231, 232 kann mindestens ein Vortex-Generator 400 vorgesehen sein. Der Vortex-Generator 400 kann im gesamten Innenvolumen des Rotorblattes platziert werden. Beispielsweise können die Vortex-Generatoren 400 im ersten, zweiten oder dritten Kanal 250, 260, 270 an den Innenseiten 211, 221 der Rotorblattschalen 210, 220 und/oder an den Stegen 231, 232 platziert werden. Durch das Vorsehen der Vortex-Generatoren 400 kann die Luftströmung im Inneren des Rotorblattes positiv beeinflusst werden. Insbesondere können Verwirbelungen erzeugt werden. Dadurch kann eine Wärmeübertragung von der erwärmten Luft, welche durch die Rotorblattheizung 500 erzeugt wird, auf die Rotorblattschalen verbessert werden.

Entlang der Länge des Rotorblattes 200 können mehrere Vortex-Generatoren 400 vorgesehen sein.

Fig. 3A und 3B zeigen einen entsprechenden Querschnitt eines Rotorblattes sowie einen Längsschnitt des Rotorblattes gemäß einem Ausführungsbeispiel der Erfindung. Während in dem Rotorblatt gemäß Fig. 2A und 2B die Kanäle 250, 260 und 270 mit den Vortex-Generatoren 400 unverändert dargestellt sind, sind in den Kanälen gemäß Fig. 3A und 3B zumindest abschnittsweise Querschnittsverengungen 310 im ersten Kanal 250, zweite Querschnittsverengungen 320 im zweiten Kanal 260 und/oder optional dritte Querschnittsverengungen 330 im dritten Kanal 270 vorgesehen. Zusätzlich zu den Vortex-Generatoren 400 können somit Querschnittsverengungen 300 vorgesehen werden.

In Fig. 3B ist die Verteilung der Querschnittsverengungen 310, 320, 330 entlang einer Längsachse des Rotorblattes dargestellt.

Sowohl die Querschnitte der Querschnittsverengungen als auch ihre Verteilung entlang der Längsachse des Rotorblattes können gemäß der Erfindung von den in Fig. 3A und 3B dargestellten Querschnitten und Längsverteilungen abweichen.

Durch die Querschnittsverengungen kommt es zu einer höheren Strömungsgeschwindigkeit der durch die Rotorblattheizung 500 in das Innere (in die Kanäle 250, 260, 270) des Rotorblattes strömenden Luft.

Die Querschnittsverengungen in Kombination mit den Vortex-Generatoren können zur Verbesserung der Rotorblattheizung beitragen.

### Bezugszeichenliste

- 100: Windenergieanlage
- 102: Turm
- 104: Gondel
- 106: Rotor
- 110: Spinner
- 200: Rotorblätter
- 203: Innenvolumen
- 210: Blattschalen
- 211: Blattschalen-Innenseite
- 220: Blattschalen
- 221: Blattschalen-Innenseite
- 230: Rotorblattvorderkante
- 231: Stege
- 232: Stege
- 240: Rotorblatthinterkante
- 250: Kanäle
- 260: Kanäle
- 270: Kanäle
- 300: Querschnittsverengung
- 310: Querschnittsverengungen
- 320: Querschnittsverengungen
- 330: Querschnittsverengungen
- 400: Vortex-Generator
- 500: Rotorblattheizung

## Patentansprüche

1. Windenergieanlagen-Rotorblatt (200), mit
einer Rotorblattschale (210, 220), welche ein Innenvolumen (203) umgibt, und
mindestens einem Vortex-Generator (400) in dem Innenvolumen (203),
wobei erste Vortex-Generatoren (400) an einer Innenseite (211, 221) der Rotorblattschale (210, 220) angeordnet werden und in das Innenvolumen (203) hineinragen,
ferner mit mindestens einem Steg (231, 232) in dem Innenvolumen (203) entlang einer Längsrichtung (L) des Rotorblattes (200),
wobei zweite Vortex-Generatoren (400) an dem mindestens einen Steg (231, 232) angeordnet sind.

2. Windenergieanlagen-Rotorblatt (200) nach Anspruch 1, mit
mindestens einem ersten und zweiten Steg (231, 232) in dem Innenvolumen (203) entlang einer Längsachse (L) des Rotorblattes (200), und
einem ersten Luftkanal (250) zwischen einer Vorderkante (230) des Rotorblattes (200) und einem ersten Steg (231),
wobei mindestens ein dritter Vortex-Generator (400) in dem ersten Luftkanal (250) vorgesehen ist.

3. Windenergieanlagen-Rotorblatt (200) nach Anspruch 2, mit
einem zweiten Luftkanal (260) zwischen einem Steg (231, 232) und einer Rotorblatthinterkante (240),
wobei mindestens ein vierter Vortex-Generator (400) zumindest teilweise in dem zweiten Luftkanal (260) entlang der Längsrichtung (L) des Rotorblattes (200) vorgesehen ist.

4. Windenergieanlagen-Rotorblatt (200) nach Anspruch 3, mit mindestens einem fünften Vortex-Generator (400) in einem dritten Lüftungskanal (270) zwischen dem ersten und zweiten Steg (231, 232).

5. Windenergieanlagen-Rotorblatt (200) nach einem der Ansprüche 1 bis 4, ferner mit
einem Rotorblattheizsystem (500) in oder an einer Rotorblattwurzel (201) des Windenergieanlagen-Rotorblattes (200), wobei das Rotorblattheizsystem (500) erwärmte Luft erzeugt und in das Innenvolumen (203) des Rotorblattes (200) befördert.

6. Windenergieanlagen-Rotorblatt (200) nach einem der Ansprüche 1 bis 5, ferner mit
mindestens einer Querschnittsverengung (300, 310, 320, 330) zur Verengung eines freien Querschnitts des Innenvolumens (203).

7. Windenergieanlage (100) mit
mindestens einem Windenergieanlagen-Rotorblatt (200) nach einem der Ansprüche 1 bis 6.

8. Windenergieanlage (100) nach Anspruch 7, ferner mit:
einem Rotorblattheizsystem (500) zum Erzeugen von erwärmter Luft, die in das Innenvolumen (203) des Rotorblattes (200) befördert wird.

## Claims

1. A wind turbine rotor blade (200), with
a rotor blade shell (210, 220), which envelops an internal volume (203), and
at least one vortex generator (400) in the internal volume (203),
wherein first vortex generators (400) are arranged on an interior side (211, 221) of the rotor blade shell (210, 220), and protrude into the internal volume (203),
further with at least one web (231, 232) in the internal volume (203) along a longitudinal direction (L) of the rotor blade (200),
wherein second vortex generators (400) are arranged on the at least one web (231, 232).

2. The wind turbine rotor blade (200) according to claim 1, with
at least one first and second web (231, 232) in the internal volume (203) along a longitudinal axis (L) of the rotor blade (200), and
a first air channel (250) between a leading edge (230) of the rotor blade (200) and a first web (231),
wherein at least one third vortex generator (400) is provided in the first air channel (250).

3. The wind turbine rotor blade (200) according to claim 2, with
a second air channel (260) between a web (231, 232) and a rotor blade trialing edge (240),
wherein at least one fourth vortex generator (400) is provided at least partially in the second air channel (260) along the longitudinal direction (L) of the rotor blade (200).

4. The wind turbine rotor blade (200) according to claim 3, with
at least one fifth vortex generator (400) in a third ventilation channel (270) between the first and second webs (231, 232).

5. The wind turbine rotor blade (200) according to one of claims 1 to 4, further with
a rotor blade heating system (500) in or on a rotor blade root (201) of the wind turbine rotor blade (200), wherein the rotor blade heating system (500) generates heated air, and conveys it into the internal volume (203) of the rotor blade (200).

6. The wind turbine rotor blade (200) according to one of claims 1 to 5, further with
at least one cross sectional constriction (300, 310, 320, 330) for narrowing a free cross section of the internal volume (203).

7. A wind turbine (100) with
at least one wind turbine rotor blade (200) according to claims 1 to 6.

8. A wind turbine (100) according to claim 7, further with:
a rotor blade heating system (500) for generating heated air, which is conveyed into the internal volume (203) of the rotor blade (200).

## Revendications

1. Pale de rotor d'éolienne (200) avec
une coque de pale de rotor (210, 220), laquelle entoure un volume intérieur (203), et
au moins un générateur de tourbillons (400) dans le volume intérieur (203),
dans laquelle des premiers générateurs de tourbillons (400) sont disposés sur un côté intérieur (211, 221) de la coque de pale de rotor (210, 220) et dépassent à l'intérieur du volume intérieur (203),
en outre avec au moins une entretoise (231, 232) dans le volume intérieur (203) le long d'une direction longitudinale (L) de la pale de rotor (200),
dans laquelle des deuxièmes générateurs de tourbillons (400) sont disposés sur l'au moins une entretoise (231, 232).

2. Pale de rotor d'éolienne (200) selon la revendication 1, avec
au moins une première et une deuxième entretoise (231, 232) dans le volume intérieur (203) le long d'un axe longitudinal (L) de la pale de rotor (200), et
un premier canal d'air (250) entre un bord d'attaque (230) de la pale de rotor (200) et une première entretoise (231),
dans laquelle au moins un troisième générateur de tourbillons (400) est prévu dans le premier canal d'air (250).

3. Pale de rotor d'éolienne (200) selon la revendication 2, avec
un deuxième canal d'air (260) entre une entretoise (231, 232) et un bord de fuite de pale de rotor (240),
dans laquelle au moins un quatrième générateur de tourbillons (400) est prévu au moins en partie dans le deuxième canal d'air (260) le long de la direction longitudinale (L) de la pale de rotor (200).

4. Pale de rotor d'éolienne (200) selon la revendication 3 avec
au moins un cinquième générateur de tourbillons (400) dans un troisième canal d'air (270) entre la première et la deuxième entretoise (231, 232).

5. Pale de rotor d'éolienne (200) selon l'une quelconque des revendications 1 à 4, avec en outre
un système de chauffage de pale de rotor (500) dans ou sur une racine de pale de rotor (201) de la pale de rotor d'éolienne (200), dans laquelle le système de chauffage de pale de rotor (500) génère de l'air réchauffé et le transporte dans le volume intérieur (203) de la pale de rotor (200).

6. Pale de rotor d'éolienne (200) selon l'une quelconque des revendications 1 à 5, avec en outre
au moins un rétrécissement de section transversale (300, 310, 320, 330) destiné à rétrécir une section transversale libre du volume intérieur (203).

7. Eolienne (100) avec
au moins une pale de rotor d'éolienne (200) selon l'une quelconque des revendications 1 à 6.

8. Eolienne (100) selon la revendication 7, avec en outre :
un système de chauffage de pale de rotor (500) destiné à générer de l'air réchauffé, qui est transporté dans le volume intérieur (203) de la pale de rotor (200).
